# EUROPEAN PATENT SPECIFICATION

(11) **EP 0 689 308 B1**
(45) Date of publication and mention of the grant of the patent: **17.10.2001**
(21) Application number: 95109194.1
(22) Date of filing: 14.06.1995
(51) Int. Cl.: H04H 1/00

(54) **A method for changing from one signal in a receiver of a digital broadcasting to another signal and a receiver for digital broadcasting**
Verfahren zur Umschaltung eines Sendesignals auf ein anderes Sendesignal in einem Empfänger eines digitalen Rundfunksystems und Empfänger für ein digitales Rundfunksystem
Méthode pour commuter la syntonisation d'un récepteur pour système de radiodiffusion numérique d'un signal vers un autre et récepteur pour radiodiffusion numérique

(30) Priority: 20.06.1994 FI 942971
(43) Date of publication of application: 27.12.1995
(73) Proprietor: NOKIA TECHNOLOGY GmbH, 75175 Pforzheim (DE)
(72) Inventor: Junell, Jari, SF-01620 Vantaa (FI); Kajava, Juha, SF-21100 Naantali (FI)
(74) Representative: Kupiainen, Juhani Kalervo

(56) References cited:
- WO-A-93/09615
- WO-A-94/07314
- EBU REVIEW TECHNICAL, no. 246, April 1991 BRUSSELS, BE, pages 87-112, G. PLENGE 'DAB, A new sound broadcasting system, status of the development, Routes to its introduction'

## Description

The invention relates to changing the signal source in a digital broadcasting system receiver and particularly to a receiver arrangement by means of which it is possible to change the signal source in a receiver reliably and as imperceptibly as possible.

One system in which the invention can be applied is the European digital audio broadcasting (DAB) system designed for broadcasting audio programs and other services to stationary or mobile receivers by means of a ground transmitter network, satellite transmitters or a mixed system comprising satellites and ground transmitters. In a digital broadcasting system one service, say, radio or television program, can be transmitted as part of a signal from several signal sources at different frequencies. Changing the signal source is appropriate especially when the transmitter or receiver or both are moving.

The Digital Audio Broadcasting System (DAB) as developed by the Eureka 147 Consortium is e. g. described in WO-A-9407314. This document also addresses the problem of reception from different signal sources such as satellite or terrestrial transmitters. WO-A-9407314 proposes a dual band receiver with two inputs, one for the satellite transmission and one for the terrestrial transmission and suggests to select the best signal in rather the same manner as an RDS receiver. WO-A-9407314 does not disclose how this switching between signal sources can be accomplished as to minimize audible interruptions when switching from the first to the second signal input.

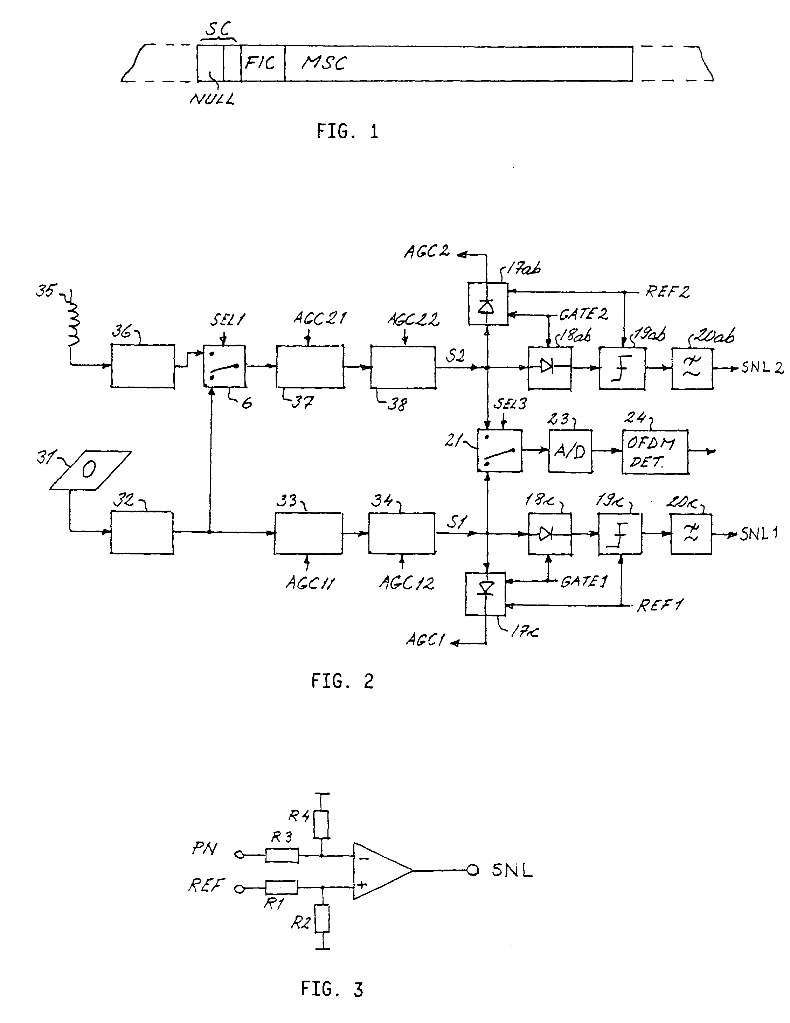

The signal used in the DAB system is an orthogonal frequency division multiplexed (OFDM) signal comprising several carrier waves around the centre frequency close to each other at regular intervals, each of which is modulated using D-QPSK modulation, for example. For the duration of each successive OFDM symbol in the signal the modulating phase remains unchanged on each carrier wave. In the various parts of the signal frame structure it is transmitted several services of which the receiver picks and decodes the service it wants. The transmitted services encoded into OFDM symbols comprise the main part of the frame, the main service channel, but in the beginning of the frame there is also a synchronization channel and an FIC information channel in which it is transmitted, among other things, control information to the receivers. Figure 1 is a schematic illustration of the DAB signal frame.

In the DAB system it is defined three different transmission modes the parameters of which are optimized for certain frequency ranges in which the system is to be used. Table 1 below shows the main parameters of the transmission modes I, II and III. Mode I is designed for frequencies below 375 MHz in ground networks and especially for use in so-called single-frequency networks. Mode II is intended to be used in the so-called L band in the range 1,452 to 1,492 MHz in ground networks, satellite transmission systems and mixed systems. Mode III is intended to be used in systems of the types listed above at frequencies below 3,000 MHz, and, furthermore, it is considered the best mode for cable transmissions.

**Table 1**

| Parameter | Mode I | Mode II | Mode III |
|---|---|---|---|
| OFDM symbols / frame | 76 | 76 | 153 |
| Number of carrier waves | 1536 | 384 | 192 |
| Duration of frame | 96 ms | 24 ms | 24 ms |
| Duration of zero symbol | 1.297 ms | 0.324 ms | 0.168 ms |
| Duration of other OFDM symbols | 1.246 ms | 0.312 ms | 0.156 ms |
| Synchronization channel | 2.544 ms | 0.636 ms | 0.324 ms |
| Guard time | 0.246 ms | 0.062 ms | 0.031 ms |

Each frame is started with a synchronization period about two OFDM symbols long containing first a signal-free period of a predetermined length, a so-called zero symbol, during which no main signal or even pure carrier wave is transmitted. The second symbol in the synchronization period is the phase reference symbol.

It has been planned that the satellite system to be used will be a system using the high elliptic orbit (HEO). In the system, several satellites are orbiting in the high elliptic orbits so that a satellite is above its target area always at a very high elevation angle and the coverage area provided by it is very big even with very small link margin values. As a satellite moves away from above the coverage area, another satellite enters the coverage area and the receiver changes satellites. Satellites also have several beams transmitted at various frequencies to different parts of the target area, and when moving, a receiver may have to change transmission beams as well. Despite the high elevation angle there are areas, such as tunnels and shadows of tall buildings, to which it is not possible to transmit a signal by satellite. Such areas are supposed to be covered by repeaters, or, gap-fillers which receive the satellite signal and pass it on at the same frequency.

Signal source may be changed in the following cases: 1) change of beam, 2) satellite system/ground system, 3) satellite/gap-filler system, and 4) change of satellite. Next we will discuss problems arising from these changes of the signal source.

In the change of beam, the signal is coming from the same satellite and, hence, the propagation delay to the receiver remains the same. The problems are a different transmission frequency and whether the receiver is deep enough in the new beam's area, ie. the signal level, and, furthermore, in which part of the frame the transmitted programs are located in the beams.

A change from a satellite system to a ground system or vice versa is the most problematic one. The main reasons are operation in different transmission modes and differences in signal propagation delays. These produce an audible break in the signal. Other problems include operation in different frequencies, different antannas required for the reception and detecting the difference in the signal levels.

When changing between a satellite and a gap-filler the mode and operating frequency remain unchanged. Furthermore, the difference in the propagation delay stays within the system's guard time, so there is no problem there. The main problems are different reception antennas and whether the signal level in the new signal source is sufficient.

In a satellite change, the receiver will use the same antenna and the nominal centre frequency of the signal will remain unchanged. Problems arise from different trajectories of the satellites with respect to the receiver at the moment of change, which causes a frequency hop error produced by the Doppler effect, and from a possible difference in the propagation delay. These may result in a short break.

In order for the signal source change to occur reliably and as imperceptibly as possible from the user's point of view, in other words, without breaks, it should be possible to ensure, for a time period long enough, the existence of the alternative signal source and that the level of the signal received from it is sufficient. So, there should be certainty about the fact that the signal-to-noise ratio of the new signal source is good enough. Also the basic level of the signal has to be set right at the moment of change as a signal that is too powerful will be cut in the A/D converter, and in a signal that is too weak the signal-to-quantization noise ratio is too low.

With a conventional receiver arrangement in which there is only one receiving chain for each frequency band and only one common receiving chain after the stabilization of the signal frequency, it is not possible to examine thoroughly enough the quality of the signals coming from the alternative signal sources before changing the signal source. Instead, in digital broadcasting systems like the one described above it is needed a receiver arrangement by means of which it is possible, in situations requiring change of signal source, as described above, to reliably discover the quality of the signal coming from the alternative signal source before making the change, and make sure that the signal coming from the new signal source is stable and of the correct level before starting to receive a service from the new signal source.

It is an object of the invention to provide a receiver arrangement which fully or at least better than conventional arrangements meets the requirements of the signal source change situations mentioned above. It is another object of the invention to provide a receiver arrangement with which a receiver meeting said requirements can be produced with reasonable costs.

The method according to the invention for changing the signal source in the receiver of a digital broadcasting system is characterized by what is expressed in claim 1. The receiver according to the invention is characterized by what is expressed in claim 8.

The receiver arrangement according to the invention has the following advantages in the various signal source change situations. Change of beams can be performed without a break in the received signal. In a change from a satellite system to ground system, when transferring from a transmission mode and frequency area to another, the break time can be shortened. When transferring from a satellite to a gap-filler, the change can be made without a break. In a satellite change the change can probably be made without a break; however, a short break is possible as a result of a Doppler difference and a distance difference.

The invention will now be described in greater detail with reference to the attached drawings wherein
- Figure 1: shows the signal frame structure used in a digital broadcasting system,
- Figure 2: is a block diagram of a receiver according to the invention,
- Figure 3: is the basic circuit arrangement of a comparator according to an embodiment of the invention,
- Figure 4: is a block diagram illustrating in greater detail an embodiment of the receiver according to the invention, and
- Figure 5: is a block diagram illustrating in greater detail another embodiment of the receiver according to the invention.

Figure 1 shows the frame structure of the OFDM signal in the European DAB system, which was already discussed above in the introductory part of the description. The figure is schematic and the proportions of the parts of the frame structure shown in the figure do not correspond to real proportions. In the beginning of the frame there is a synchronization period SC about two OFDM symbols long which starts with a signal-free period, ie. a so-called zero symbol NULL, during which no modulating main signal or even carrier wave is transmitted. During the zero symbol it is possible to transmit, for example, in every other frame at low power the identification information signal of the transmitter. In the arrangement according to the invention the duration of the zero symbol is used for detecting the noise power of the signal. It is obvious that the application of the invention is not limited to the zero symbol described here, which has the length of about one symbol and is located immediately at the beginning of the frame. The signal-free period for synchronization purposes at a certain location in the frame, having a certain length, which is here called a zero symbol, can in different applications have different lengths and locations and it can just as well be used for detecting noise power and changing the signal source according to the principles of the invention.

Figure 2 is a simplified block diagram of an embodiment of the receiver according to the invention illustrating the method according to the invention and the operation of the receiver arrangement according to the invention. In the first receiving chain of the receiver in Figure 2 there is a first antenna 31, which in this example is an antenna meant for satellite reception, and after that a signal processing block 32 including at least a bandpass filter and possibly a first frequency-decreasing part, for example. The receiving chain is further depicted by two blocks 33 and 34, the first of which may comprise a controllable intermediate frequency part and the second substantially the circuits needed for I/Q detection. After the block 34 the signal S1 received by this receiving chain includes the I and Q signals. Following the block 34 the signal is taken to an A/D converter 23 and OFDM detector 24 which decodes the OFDM symbols. In the first receiving chain the signal is also taken to an AGC detector 17c which on the basis of the reference voltage REF1 set for this receiving chain produces a level control signal AGC1 which is used to generate control signals AGC11 and AGC12 with which the level of the received signal is set as desired in this receiving chain, which is indicated in blocks 33 and 34.

In the arrangement according to the invention the signal is also taken to a noise detector 18c and comparator 19c to detect and determine the noise power of the received signal. Noise power is detected in the signal during the zero symbol NULL mentioned above, during which the transmitter is usually not transmitting a signal and the receiver is receiving noise only. The receiver includes a zero symbol detector; and a gating signal GATE1 obtained from that detector is used for turning the noise detector 18c on and the AGC detector 17c off for the duration of the zero symbol. The zero symbol detector, which, for reasons of clarity, is not included in the block diagram, may be implemented as an analog or a digital arrangement. One possible implementation is presented in the European patent publication EP-A-0689314.

In the arrangement according to the invention the receiver is provided with a second receiver chain at least partly in parallel with the first receiver chain, through which a second signal S2 received from a second signal source can be connected by a switch 21 instead of the signal S1 received through the first receiving chain to the A/D converter 23 and OFDM detector 24. The second receiving chain includes parts 35, 36, 37 and 38 the function and operation of which correspond to those of parts 31, 32, 33 and 34 in the first receiving chain. The antenna 35 is in this example a multiband antenna adjusted to receive signals both in the frequency range 48 MHz to 240 MHz and in the range 1452 MHz to 1492 MHz. In addition, the receiver includes a switch 6 by means of which it is possible to take a signal to the tail part 37, 38 of the second receiving chain either from the head part 31, 32 of the first receiving chain or from the head part 35, 36 of the second receiving chain. The operating principle is as follows: of two signals having frequencies close to each other, received through the antenna 31 meant for satellite reception, one can be taken to the first receiving chain and the other to the second receiving chain. If the first signal comes from a satellite and the alternative second signal from a ground transmitter, the latter will be received through the antenna 35 and the switch 6 will connect it to the tail part of the second receiving chain.

Also at the end of the second receiving chain the signal is taken to an AGC detector 17ab which provides the signal AGC2; and the control signals AGC21 and AGC22 generated on the basis of that signal are used for controlling the signal level in this receiving chain. Likewise, the signal is taken, as in the first receiving chain, to a noise detector 18ab and a comparator 19ab, and the AGC detector 17ab and the noise detector 18ab are keyed in the same manner with the gating signal GATE2 obtained from the zero symbol detector. For level detection and noise measurement a reference voltage REF2 is brought to the AGC detector 17ab and comparator 19ab in the second receiving chain.

It is characteristic of the arrangement according to the invention that it is examined in both receiving chains whether the signal-to-noise ratio is bigger or smaller than the predetermined signal-to-noise ratio limit value for that particular chain. This is done in the first and second receiving chains in comparators 19ab and 19c, respectively, for which one possible implementation is shown in Figure 3. In the coupling of Figure 3 a reference voltage REF, which corresponds to the mean power of the signal, is taken via a voltage division comprising resistors R1 and R2 to one input of the comparator, and the measured noise power PN is taken via a voltage division comprising resistors R3 and R4 to the other input of the comparator. By setting the resistor values suitably the state of the comparator can be changed with the signal-to-noise ratio limit value desired for each case and receiving chain. The comparator provides signal SNL which indicates whether the measured signal-to-noise ratio is bigger or smaller than the preset limit value. This signal is used in the receiver's control logic for decision-making concerning the change of signal source. The signal source is changed when the signal-to-noise ratio of the currently received first signal S1 drops below the first limit value set for the first receiving chain and when the signal-to-noise ratio of the alternative second signal S2 received through the second receiving chain exceeds the second limit value set for the second receiving chain. As shown in Figure 2, comparators 19ab and 19c are followed by low-pass filters 20ab and 20c, respectively, which eliminate short change peaks from the comparison result provided by the comparator.

Here it is presented in detail only an analog noise comparison but it is clear that the noise comparison can be implemented also digitally, e.g. so that the output of the noise detector 18ab, 18c is A/D converted, one possibility then being to average the noise power for 4 to 6 frames, for example, continuously with the LIFO principle by means of a sliding window and to compare the result to a corresponding level digitally set for the receiving chain. A person skilled in the art will understand that the noise comparison may also be implemented in many other ways.

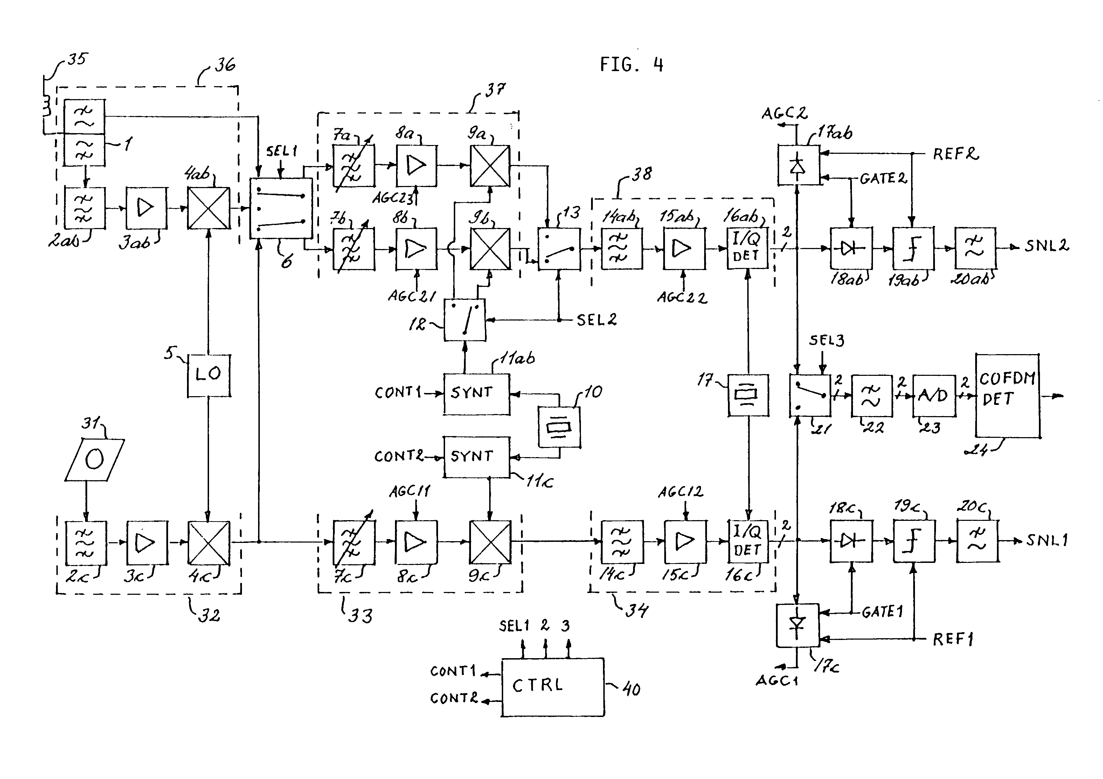

Below it will be described in greater detail the implementation and operation of the arrangement according to the invention with reference to Figure 4 in which it is shown an embodiment of the receiver as a more detailed block diagram and at the same time indicated the parts of the receiving chains that correspond to the block diagram illustration of Figure 2, marked off partly by dashed lines and having the same reference numbers. The receiver in Figure 4 comprises three receiving chains, or branches a, b, and c, which can cover the signal bands in the range 48 to 240 MHz meant for ground systems, and both the ground and satellite reception in the range 1452 to 1492 MHz (L range). Antenna 31 is for satellite reception and antenna 35 is a multiband antenna that can be used to receive the signals of ground transmitters in both of the above-mentioned ranges. In the beginning of the receiving chains there is a bandpass filter 2ab, 2c, amplifier 3ab, 3c and a mixer 4ab, 4c as well as a local oscillator 5 for generating a lower frequency signal from a signal received in the L range. If a signal is received from a ground transmitter at the lower frequency, it can be connected by means of a switch 6 directly from the antenna filter 1 to the intermediate frequency branch a, as shown in the figure. If the signal is received from a ground transmitter at the higher frequency, it is connected by means of the switch 6 to the intermediate frequency branch b. By means of the switch 6 and the connection from the c branch to the switch it is also possible to connect an alternative satellite signal, ie. basically the signal of another beam transmitted by the satellite at a different frequency, to branch b, when the currently received satellite signal is processed in branch c.

The intermediate frequency stages of each branch a, b and c comprise an adjustable bandpass filter 7a, 7b and 7c, respectively, a controllable amplifier 8a, 8b and 8c, respectively, and a mixer 9a, 9b and 9c, respectively, as well as a frequency regulating oscillator 10 and controllable synthesizers 11ab, which can be connected through a switch 12 either to branch a or b, and 11c for branch c. The intermediate frequency stages are followed by I/Q detector stages of which the one composed of a bandpass filter 14ab, controllable amplifier 15ab, and an I/Q detector 16ab is common for branches a and b, either of which can be connected to it through the switch 13. Correspondingly, branch c includes a bandpass filter 14c, controllable amplifier 15c, and an I/Q detector 16c. The oscillator 17 is shared by both branches. Following the I/Q detector the signal is split into I and Q signals. The functions and operation of the other blocks in the coupling have been described above in connection with the discussion associated with Figure 2. Additionally to the blocks shown in Figure 2 there is also a low-pass filter 22 prior to the A/D converter 23, and the OFDM detector is specified as a COFDM (coded orthogonal frequency division multiplex) detector.

Naturally the receiver also includes control circuits to control the operation of the receiver. The control circuits are described here by a separate block 40 which produces e.g. signals SEL1, SEL2 and SEL3 controlling the switches 6, 13 and 21 as well as corresponding controls CONT1 and CONT2 for the synthesizers 11ab and 11c. It is clear to a person skilled in the art that Figure 4 shows only those features of the operation and control of the operation of the receiver that are essential for the explanation and understanding of the invention, and that such an amplifier, when it is implemented in practice with electronic circuits and couplings, includes several circuits and signals not shown here which enable the operation illustrated here at the block diagram level.

Next it is described the operation of the receiver in various signal source change situations. From the point of view of the receiver the easiest situation is a change between a satellite and gap-filler, the next easiest is a change of beams, and the most difficult one is a change between a satellite system and ground system. The operation in the various situations is described in this order.

Let us assume that the current signal source is a satellite. The signal received from this signal source, the first signal, arrives via the antenna 31 and receiving chain c finally to the COFDM detector 24 and its signal-to-noise ratio is observed in the manner described above. By means of the receiving chain b it is monitored all the time the signal-to-noise ratio of the alternative second signal from the gap-filler, received possibly via the antenna 35. If the signal-to-noise ratio of the first signal drops below a preset limit value, the signal to the A/D converter 23 and COFDM detector 24 is taken from branch b by means of the switch 21 if the signal-to-noise ratio there is sufficient, ie. exceeds the limit value set for it. Correspondingly, the reception is transferred from the gap-filler back to satellite when the signal-to-noise ratio of receiving branch b drops below the preset limit value.

When changing satellites, the problem is not so much a sufficient signal-to-noise ratio in the new satellite, since the change occurs controlled by the system when the new satellite starts to cover the location of the receiver. As stated before, problems may instead be caused by a frequency hop resulting from a Doppler difference and by a difference in the propagation delay. With the arrangement according to the invention shown in Figure 4 it is possible to improve the operation of the receiver also with respect to the problems related to this change situation. The receiver will be given information about the satellite change beforehand on the FIC channel. Thus the receiver can prepare for the signal source changeover, with the assumption that the changes in the changeover are about the same as in the previous satellite changeover. When commencing the changeover, the current AFC control value is stored in memory and the change caused by the previous satellite changeover in the AFC control signal is fetched from memory. The change is added to the current AFC control value and given to the frequency control oscillator immediately after the last symbol of the currently received program in the frame preceding the satellite changeover so that the oscillator has time to become stabilized before the first symbol of the program in the frame after the changeover. This guarantees that no break will occur, if the propagation delay difference of the signals is small and the receiver is in the same area as during the previous satellite change. Then the hop in the signal frequency caused by the Doppler effect is approximately the same. Finally, it is measured the AFC control signal value and the control signal value before the change is subtracted from it. This value is stored in memory for the next satellite change. Alternatively, it is possible to store in memory the control signal value after the change, which is given to the frequency control oscillator just before the satellite change. If the AFC control signal value, to which it has been added the correction value, exceeds before the change the linear AFC range, then the division number of the synthesizer 11ab of branch b is changed beforehand so that the control signal taken to the frequency control oscillator is in the permissible range. Then the signal is connected at the moment of the satellite change by means of the switches 6 and 21 to travel through branch b to the A/D converter 23 and COFDM detector 24. After the change, the division number of the synthesizer 11c of branch c is changed to equal the division number of the synthesizer 11ab of branch b. When the loop of the synthesizer 11c has stabilized, the signal is again connected by means of the switches 6 and 21 to travel through branch c, which is the main branch for satellite reception.

A change of beams occurs generally when the receiver travels considerable distances, e.g. across Europe. The receiver has examined on the FIC channel whether the program it is receiving is transmitted at another frequency, either by another satellite beam or on a ground network. When the signal-to-noise ratio of the satellite signal drops below a predetermined limit value and there is no signal in the repeater branch, then it is first connected by means of a switch 6 to branch b the frequency of another beam transmitting the same program. Prior to that, when there was a good signal level in receiving branch c, the receiver ensured, on the basis of the information obtained from the FIC channel, by means of branch b that there exist such an alternative signal source.

If no signal from an alternative beam is found and, according to the information from the FIC channel, the received program is transmitted in the ground network as well, then the reception is transferred either to branch a or branch b, depending on the frequency area of the transmission, to examine the signal from the ground network. If the signal-to-noise ratio is sufficient, then the reception is transferred to the ground network, ie. the signal of branch a or branch b is connected by means of the switches 6 and 21 to an A/D converter and COFDM detector, and the receiver will remain examining the satellite signal by means of receiving branch c. The problem is that prior to the frequency stabilization the satellite branch may have a different local oscillator than the ground branch, if it is not receiving in the L range. In addition, it is probable that the ground transmission has a different transmission mode than the satellite transmission. Therefore, it is likely that there will occur an audible break in the reception.

In fact, the change of signal sources should occur when the mean bit error level of the signal received from the current signal source exceeds a certain limit value. In the arrangement presented here the bit error rate is measured indirectly through the signal-to-noise ratio. Correspondence between the signal-to-noise ratio and bit error level depends on whether the current channel is e.g. a Rayleigh, Rice or AWGN type channel. This problem can be partly circumvented by setting, in the comparator of Figure 3, one resistor variable according to the frequency range and antenna used for the reception of the signal. For example, in the L range satellite reception the channel is nearly an AWGN channel. Another problem is the occurrence of a narrow-band interference in the desired band. Then the noise power may be measured higher than what it really is. A third problem is a possible difference between the frame start points in the current and alternative signal sources. This problem occurs especially in a change situation in which it is transferred from a satellite source to a ground source or vice versa, and a solution to the problem could be that the second receiving chain used to examine the alternative signal be provided with an analog zero symbol detector.

Another way to determine the signal-to-noise ratio is to average the noise power spectrum obtained from the zero symbol after the FFT circuit (not shown in the drawing) in the COFDM detector. Since the mean signal power coming to the antenna changes as a function of time and, yet, the automatic gain control AGC keeps it constant in the input of the COFDM detector, the noise power density spectrum coming to the antenna as constant becomes variable in the COFDM detector input. Therefore, averaging noise spectrum components as a function of time usually gives a wrong picture of the mean signal-to-noise ratio. So, in this case, measured noise spectrum components are averaged with each other. Then it is obtained a good estimate for the noise power, assuming that the noise power density spectrum is fairly even across the whole band measured. In addition, by leaving out the highest noise power spectrum component it is possible to eliminate the effect of the narrow-band interference signal without making a considerable error in determining the noise power of a case with no interference. Due to AGC the mean signal power is constant and, thus, the signal-to-noise ratio can be calculated. The signal-to-noise ratio of the alternative second branch can be estimated in the same manner by switching the other branch to the COFDM detector for the duration of the zero symbol and calculating the noise power as described above. It is not necessary to use all noise spectrum components obtained from the FFT to calculate the noise power, but e.g. every eighth component will do.

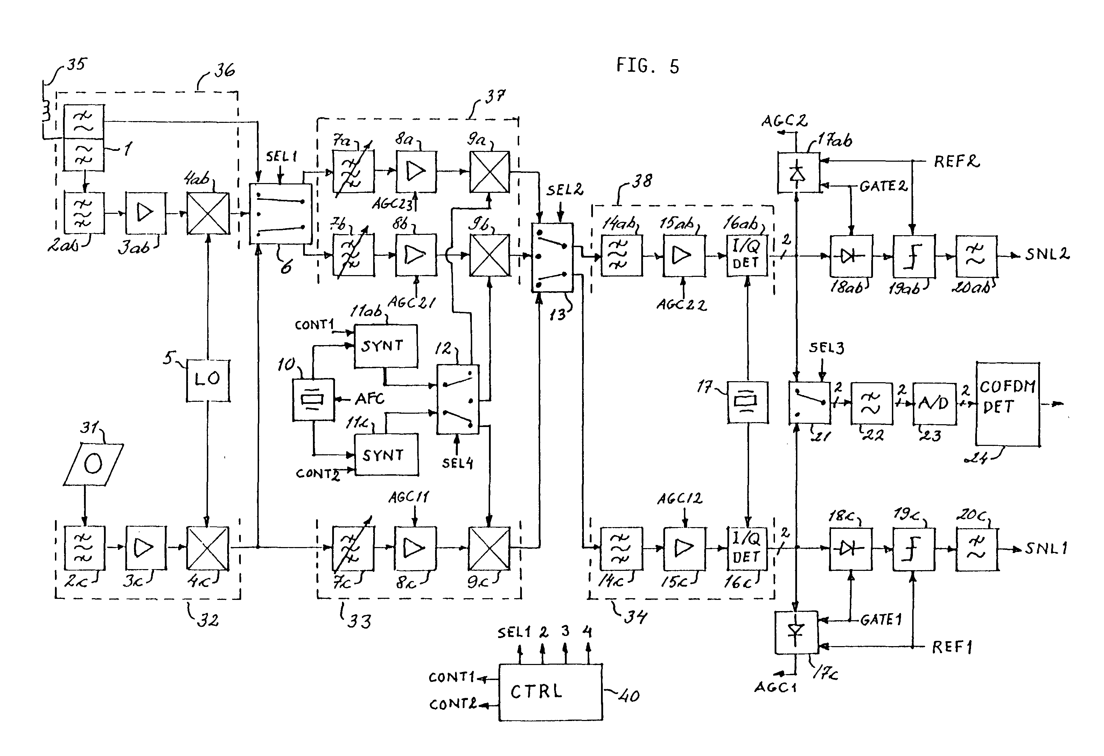

There is still another possible signal source change situation, which is not discussed above, and it is a change of ground signal sources. Figure 5 shows an arrangement slightly modified with respect to the the receiver of Figure 4, enabling the handling of this kind of change in the above-described manner according to the invention. Also in Figure 5 it is indicated the parts of the receiving chains that correspond to the block diagram illustration of Figure 2, marked off partly by dashed lines and having the same reference numbers, but let it be pointed out that the embodiment in Figure 5 differs from the application shown in Figure 2 with respect to the coupling possibilities between the middle and tail parts of the receiving chains. In the receiver arrangement of Figure 5 it is possible to determine the signal-to-noise ratio in a manner according to the invention and accordingly make the selection between the signals received through receiving branches a and b, since the signal from branch b can be connected by means of a switch 13 to the tail part of branch c when the signal from branch a is processed at the tail part of the other branch. Also the operation of switch 12 is changed so that the synthesizers 11ab and 11c can now be connected respectively to the mixers 9a and 9b of branches a and b. For switch 12 there is now a control signal SEL4 obtained from a controller 40.

## Claims

1. A method for changing the signal source in a digital broadcasting system receiver adapted to receive the digital broadcasting system's OFDM signal having for synchronization purposes a frame containing in a predetermined position a signal-free period of a predetermined length, said receiver receiving a first signal from a first signal source through a first receiving chain wherefrom the signal (S1) is taken for an A/D conversion and OFDM detection, the signal level being detected in the receiving chain before the signal is taken for the A/D conversion, and the signal level being controlled in the receiving chain on the basis of said detection,
**characterized in that**
in the signal received through the first receiving chain said signal-free period is also detected and during the signal-free period the receiver is set to stop the level detection of said signal (S1) and to detect instead the noise power received through the first receiving chain,
a second signal (S2) from a second signal source is received through a second receiving chain in said receiver, in said second receiving chain the following operations being performed substantially in the same manner as in the first receiving chain: the signal level is detected and controlled, and the noise power is detected,
a first and a second limit value is set for the signal-to-noise ratio of the first and the second receiving chain, respectively,
the signal-to-noise ratios of the first and second receiving chains are compared with the first and second limit values, respectively, and
the second signal received through the second receiving chain is connected instead of the first signal received through the first chain to be A/D converted and OFDM detected if the signal-to-noise ratio of the first receiving chain is below the first limit value and the signal-to-noise ratio of the second receiving chain exceeds the second limit value.

2. The method of claim 1, **characterized in that** the signal levels are controlled in the first and second receiving chains according to respective reference signals (REF1, REF2) and that the signal-to-noise ratios of the first and second receiving chains are compared with the respective limit values by comparing the respective detected noise power values with limit values corresponding to said first and second limit values for the signal-to-noise ratio, said first and second limit values being set by means of the respective reference signals (REF1, REF2).

3. The method of claim 2, **characterized in that** short change peaks are filtered out from the results from the comparison of the detected noise power values with the respective limit values.

4. The method of claim 1, **characterized in that** to compare the signal-to-noise ratio of a receiving chain with the corresponding limit value the noise power of the receiving chain is estimated by averaging the noise power spectrum obtained from said signal-free period after an FFT conversion included in the OFDM detection.

5. The method of claim 4, **characterized in that** the noise power is estimated by averaging measured noise spectrum components with each other.

6. The method of claim 5, **characterized in that** when averaging spectrum components, the highest spectrum component is left out to eliminate a narrow-band interference signal.

7. The method of any one of claims 4 to 6, **characterized in that** the noise power of the second receiving chain is estimated by connecting at times the second receiving chain to be OFDM detected for the duration of said signal-free period.

8. A receiver to receive a digital broadcasting system's OFDM signal in the frame of which there is for synchronization purposes in a predetermined position a signal-free period of a predetermined length, comprising:
a first receiving chain (32, 32, 33, 34) to receive and process a first signal coming from a first signal source,
successively coupled A/D converter (23) and OFDM detector (24) to which the received and processed signal (S1) is taken from said receiving chain to be OFDM detected,
a first level detector (17c) to which the signal (S1) received and processed by the first receiving chain is also taken to detect the level of the signal and to generate a control signal (AGC1) to set the signal level in the first receiving chain according to a reference signal (REF1) received by the level detector, and
means for detecting said signal-free period,
**characterized in that** it also includes:
a first noise detector (18c) which is set by a gating signal (GATE1) obtained from the detection of said signal-free period to detect noise received by the first receiving chain for the duration of the signal-free period, whereby said gating signal (GATE1) also sets the first level detector to stop the level detection for the duration of said signal-free period,
a second receiving chain (35, 36, 37, 38; 31, 32, 37, 38) to receive and process a second signal coming from a second signal source and a second level detector (17ab) and a second noise detector (18ab) which operate with respect to the second receiving chain just as the first level detector (17c) and the first noise detector (18c) operate with respect to the first receiving chain, whereby the second level detector receives a reference signal (REF2) and generates a control signal (AGC2) to set the signal level of the second receiving chain, and the gating signal (GATE2) controlling said second detectors (17ab, 18ab) is obtained from the detection of said signal-free period of the second signal,
means (21) for connecting the second signal (S2) obtained from the second receiving chain to an A/D converter (23) and OFDM detector (24) instead of the first signal (S1) obtained from the first receiving chain, and
a first and a second comparator (19c, 19ab) to compare the noise power detected by the first and second noise detectors (18c, 18ab) respectively with the corresponding first and second limit values set by means of corresponding reference signals (REF1, REF2), whereby the second signal (S2) received through the second receiving chain is connected instead of the first signal (S1) received through the first receiving chain to an A/D converter (23) and OFDM detector (24) if the noise power detected by the first noise detector (18c) exceeds said first limit value and if the noise power detected by said second noise detector (18ab) is below said second limit value.

9. The receiver of claim 8, **characterized in that** it includes two complete receiving chains, of which:
the receiving chain intended for satellite reception comprises a first antenna (31), a first head part (32) which is essentially a frequency-decreasing part, a first middle part (33) which is essentially a frequency-decreasing and stabilization part including a frequency synthesizer, and a first tail part (34) which is essentially an I/Q detector part, and
the receiving chain intended for ground reception comprises a multiband antenna (35) and a head part (36), middle part (37) and a tail part (38) the purpose and function of which are identical to those of the corresponding parts (32, 33, 34) in the first receiving chain.

10. The receiver of claim 9, **characterized in that** the first receiving chain comprises a receiving chain (31, 32, 33, 34) intended for satellite reception, and the second receiving chain comprises a receiving chain (35, 36, 37, 38) intended for ground reception.

11. The receiver of claim 9, **characterized in that** the first receiving chain comprises a receiving chain (31, 32, 33, 34) intended for satellite reception and that the receiver also includes a switch (6) between the second head part (36) and the second middle part (37) and a connection from the switch to a point between the first head part (32) and the first middle part (33), whereby the second head part can be disconnected from the second middle part and the second receiving chain can be connected so as to comprise the first antenna (31), the first head part (32), the second middle part (37) and the second tail part (38).

12. The receiver of any one of claims 9 to 11, **characterized in that** the second head part (36) includes, in addition to a frequency-decreasing branch (2ab, 3ab, 4ab), an antenna filter between said branch and the antenna, and for lower ground transmission frequencies a direct connection in parallel with the frequency-decreasing branch, that the second middle part (37) includes two frequency-decreasing and stabilization branches (a, b) either of which can be connected by a switch (13) between the second middle part and the second tail part to the second tail part (38), and that either of the branches of the second head part (36) can be selected for said branches (a, b) of the second middle part through a switch (6) between the second head part (36) and the second middle part (37).

13. The receiver of claim 12, **characterized in that** there are also connections from the switch (13) between the second middle part (37) and the second tail part (38) to the first middle part (33) and the first tail part (34) and that by means of the switch (13) one branch (a) of the second middle part (37) can be connected to the second tail part (38) and the other branch (b) of the second middle part (37) can be connected to the first tail part (34) while at the same time the first middle part (33) is disconnected from the first tail part (34), whereby both the first and the second receiving chains can receive signals from a ground transmitter and a change can be made between them.

## Patentansprüche

1. Verfahren zum Wechseln der Signalquelle in einem Empfänger in einem digitalen Rundfunksystem, der so ausgebildet ist, dass er das OFDM-Signal des digitalen Rundfunksystems empfängt, das zu Synchronisationszwecken einen Rahmen aufweist, der an einer vorbestimmten Position eine signalfreie Periode vorbestimmter Länge aufweist, wobei der Empfänger ein erstes Signal von einer ersten Signalquelle über eine erste Empfangskette empfängt, aus dem das Signal (S1) für A/D-Wandlung und OFDM-Demodulation entnommen wird, wobei der Signalpegel in der Empfangskette erfasst wird, bevor das Signal zur A/D-Wandlung geführt wird, und der Signalpegel in der Empfangskette auf Grundlage dieser Erfassung gesteuert wird; **dadurch gekennzeichnet, dass**
- im über die erste Empfangskette empfangenen Signal die signalfreie Periode ebenfalls erfasst wird und während dieser signalfreien Periode der Empfänger so eingestellt wird, dass er die Pegelerfassung des genannten Signals (S1) beendet und stattdessen die über die erste Empfangskette empfangene Störsignalleistung erfasst;
- ein zweites Signal (S2) von einer zweiten Signalquelle über eine zweite Empfangskette im Empfänger empfangen wird, wobei in dieser Empfangskette die folgenden Operationen im Wesentlichen auf dieselbe Weise wie in der ersten Empfangskette ausgeführt werden:
-- der Signalpegel wird erfasst und geregelt, und die Störsignalleistung wird erfasst;
-- für das Signal/Rauschsignal-Verhältnis der ersten und zweiten Empfangskette wird ein erster bzw. zweiter Grenzwert eingestellt;
-- die Signal/Rauschsignal-Verhältnisse der ersten und zweiten Empfangskette werden mit dem ersten bzw. zweiten Grenzwert verglichen; und
-- das über die zweite Empfangskette empfangene zweite Signal wird anstelle des über die erste Kette empfangenen ersten Signals angeschlossen, um eine A/D-Wandlung und eine OFDM-Demodulation zu erfahren, wenn das Signal/Rauschsignal-Verhältnis der ersten Empfangskette unter dem ersten Grenzwert liegt und das Signal/Rauschsignal-Verhältnis der zweiten Empfangskette den zweiten Grenzwert überschreitet.

2. Verfahren nach Anspruch 1, **dadurch gekennzeichnet, dass** die Signalpegel in der ersten und zweiten Empfangskette entsprechend jeweiligen Bezugssignalen (REF1, REF2) eingestellt werden und die Signal/Rauschsignal-Verhältnisse der ersten und zweiten Empfangskette dadurch mit den jeweiligen Grenzwerten verglichen werden, dass die jeweils erfassten Werte der Störsignalleistung mit Grenzwerten verglichen werden, die dem ersten und zweiten Grenzwert für das Signal/Rauschsignal-Verhältnis entsprechen, wobei der erste und zweite Grenzwert durch die jeweiligen Bezugssignale (REF1, REF2) eingestellt werden.

3. Verfahren nach Anspruch 2, **dadurch gekennzeichnet, dass** kurze Änderungsspitzenwerte aus den Vergleichsergebnissen der erfassten Werte der Störsignalleistung mittels der jeweiligen Grenzwerte ausgefiltert werden.

4. Verfahren nach Anspruch 1, **dadurch gekennzeichnet, dass** zum Vergleichen des Signal/Rauschsignal-Verhältnisses einer Empfangskette mit dem entsprechenden Grenzwert die Störsignalleistung der Empfangskette dadurch abgeschätzt wird, dass das aus der signalfreien Periode enthaltene Spektrum der Störsignalleistung nach einer FFT-Wandlung bei der OFDM-Demodulation gemittelt wird.

5. Verfahren nach Anspruch 4, **dadurch gekennzeichnet, dass** die Störsignalleistung dadurch abgeschätzt wird, dass die gemessenen Komponenten des Störsignalspektrums gegeneinander aufgemittelt werden.

6. Verfahren nach Anspruch 5, **dadurch gekennzeichnet, dass** beim Mitteln der Spektrumskomponenten die größte Spektrumskomponente weggelassen wird, um ein schmalbandiges Interferenzsignal zu beseitigen.

7. Verfahren nach einem der Ansprüche 4 bis 6, **dadurch gekennzeichnet, dass** die Störsignalleistung der zweiten Empfangskette dadurch abgeschätzt wird, dass die zweite Empfangskette zeitweilig angeschlossen wird, um für die Dauer der signalfreien Periode eine OFDM-Demodulation zu erfahren.

8. Empfänger zum Empfangen eines OFDM-Signals in einem digitalen Rundfunksystem, in dessen Rahmen sich zu Synchronisationszwecken an einer vorbestimmten Position eine signalfreie Periode vorbestimmter Länge befindet, mit:
- einer ersten Empfangskette (32, 32, 33, 34) zum Empfangen und Verarbeiten eines von einer ersten Signalquelle herrührenden ersten Signals;
- einem A/D-Wandler (23) und einem OFDM-Demodulator (24), die aufeinanderfolgend angeschlossen sind, und in die das empfangene und verarbeitete Signal (S1) aus der Empfangskette aufgenommen wird, um eine OFDM-Demodulation zu erfahren;
- einem ersten Pegeldetektor (17c), in den das durch die erste Empfangskette empfangene und verarbeitete Signal (S1) ebenfalls aufgenommen wird, um den Signalpegel zu erfassen und ein Steuersignal (AGC1) zum Einstellen des Signalpegels in der ersten Empfangskette entsprechend einem vom Pegeldetektor empfangenen Bezugssignal (REF1) einzustellen; und
- einer Einrichtung zum Erkennen der signalfreien Periode;
**dadurch gekennzeichnet, dass** er auch Folgendes aufweist:
- einen ersten Störsignaldetektor (18c), der durch ein aus der Erkennung der signalfreien Periode erhaltenes Torsignal (GATE1) aktiviert wird, um von der ersten Empfangskette empfangene Störsignale für die Dauer der signalfreien Periode zu erfassen, wobei das Torsignal (GATE1) auch den ersten Pegeldetektor so einstellt, dass die Pegelerfassung für die Dauer der signalfreien Periode gestoppt wird;
- eine zweite Empfangskette (35, 36, 37, 38; 31, 32, 37, 38) zum Empfangen und Verarbeiten eines zweiten Signals von einer zweiten Signalquelle und einem zweiten Pegeldetektor (17ab) und einem zweiten Störsignaldetektor (18ab), die hinsichtlich der zweiten Empfangskette genauso wie der erste Pegeldetektor (17c) und der erste Störsignaldetektor (18c) hinsichtlich der ersten Empfangskette arbeiten, wobei der zweite Pegeldetektor ein Bezugssignal (REF2) empfängt und ein Steuersignal (AGC2) erzeugt, um den Signalpegel der zweiten Empfangskette einzustellen, und das die zweiten Detektoren (17ab, 18ab) steuernde Torsignal (GATE2) aus der Erkennung der signalfreien Periode des zweiten Signals erhalten wird;
- eine Einrichtung (21) zum Verbinden des von der zweiten Empfangskette erhaltenen zweiten Signals (S2) mit einem A/D-Wandler (23) und einem OFDM-Demodulator (24) anstatt des von der ersten Empfangskette erhaltenen ersten Signals (S1); und
- einen ersten und einen zweiten Komparator (19c, 19ab) zum Vergleichen der vom ersten bzw. zweiten Störsignaldetektor (18c, 18ab) erfassten Störsignalleistung mit dem entsprechenden ersten und zweiten Grenzwert, die mittels der entsprechenden Bezugssignale (REF1, REF2) eingestellt wurden, wobei das über die zweite Empfangskette empfangene zweite Signal (S2) anstelle des über die erste Empfangskette empfangenen ersten Signal (S1) an den A/D-Wandler (23) und den OFDM-Demodulator (24) gegeben wird, wenn die vom ersten Störsignaldetektor (18c) erfasste Störsignalleistung den ersten Grenzwert überschreitet und die vom zweiten Störsignaldetektor (18ab) erfasste Störsignalleistung unter dem zweiten Grenzwert liegt.

9. Empfänger nach Anspruch 8, **dadurch gekennzeichnet, dass** er zwei vollständige Empfangsketten enthält, von denen:
- die für Satellitenempfang vorgesehene Empfangskette eine erste Antenne (31), einen ersten vorderen Teil (32), der im Wesentlichen ein Frequenzabsenkungsteil ist, einen ersten mittleren Teil (33), der im Wesentlichen ein Frequenzabsenk-und Stabilisierteil mit einem Frequenzsynthesizer ist, und einen ersten hinteren Teil (34) aufweist, der im Wesentlichen ein I/Q-Detektorteil ist; und
- die für Erdeempfang vorgesehene Empfangskette eine Mehrbandantenne (35) und einen vorderen Teil (36), einen mittleren Teil (37) und einen hinteren Teil (38) aufweist, deren Zweck und Funktion identisch mit denen der entsprechenden Teile (32, 33, 34) in der ersten Empfangskette sind.

10. Empfänger nach Anspruch 9, **dadurch gekennzeichnet, dass** die erste Empfangskette eine für Satellitenempfang vorgesehene Empfangskette (31, 32, 33, 34) aufweist und die zweite Empfangskette eine für Masseempfang vorgesehene Empfangskette (35. 36, 37, 38) aufweist.

11. Empfänger nach Anspruch 9, **dadurch gekennzeichnet, dass** die erste Empfangskette eine für Satellitenempfang vorgesehene Empfangskette (31, 32, 33, 34) aufweist und der Empfänger auch einen Schalter (6) zwischen dem zweiten vorderen Teil (36) und dem zweiten mittleren Teil (37) und eine Verbindung vom Schalter zu einem Punkt zwischen dem ersten vorderen Teil (32) und dem ersten mittleren Teil (33) aufweist, wodurch der zweite vordere Teil vom zweiten mittleren Teil getrennt werden kann und die zweite Empfangskette angeschlossen werden kann, so dass sie die erste Antenne (31), den ersten vorderen Teil (32), den zweiten mittleren Teil (37) und den zweiten hinteren Teil (38) umfasst.

12. Empfänger nach einem der Ansprüche 9 bis 11, **dadurch gekennzeichnet, dass** der zweite vordere Teil (36), zusätzlich zu einem Frequenzabsenkungszweig (2ab, 3ab, 4ab), ein Antennenfilter zwischen diesem Zweig und der Antenne sowie, für niedrigere Frequenzen bei Erdeübertragung, eine direkte Verbindung parallel zum Frequenzabsenkungszweig aufweist, der zweite mittlere Teil (37) zwei Frequenzabsenkungs- und Stabilisierzweige (a, b) aufweist, von denen jeder durch einen Schalter (13) zwischen dem zweiten mittleren Teil und dem zweiten hinteren Teil mit dem zweiten hinteren Teil (38) verbunden werden kann, und jeder der Zweige des zweiten hinteren Teils (36) für die Zweige (a, b) des zweiten mittleren Teils durch einen Schalter (6) zwischen dem zweiten vorderen Teil (36) und dem zweiten mittleren Teil (37) ausgewählt werden kann.

13. Empfänger nach Anspruch 12, **dadurch gekennzeichnet, dass** auch Verbindungen vom Schalter (13) zwischen dem zweiten mittleren Teil (37) und dem zweiten hinteren Teil (38) zum ersten mittleren Teil (33) und zum ersten hinteren Teil (34) existieren und mittels dieses Schalters (13) ein Zweig (a) des zweiten mittleren Teils (37) mit dem zweiten hinteren Teil (38) verbunden werden kann und der andere Zweig (b) des zweiten mittleren Teils (37) mit dem ersten hinteren Teil (34) verbunden werden kann, während gleichzeitig der erste mittlere Teil (33) vom ersten hinteren Teil (34) getrennt wird, wodurch sowohl die erste als auch die zweite Empfangskette Signale von einem Erdesender empfangen können und zwischen diesen umgeschaltet werden kann.

## Revendications

1. Procédé de commutation de source de signaux dans un récepteur de système de diffusion numérique conçu pour recevoir le signal OFDM de système de diffusion numérique, qui comporte, à des fins de synchronisation, une trame contenant, en une position prédéterminée, une période sans signal d'une longueur prédéterminée, ledit récepteur recevant un premier signal d'une première source de signaux au travers d'une première chaîne réceptrice à partir de laquelle le signal (S1) est pris en vue d'une conversion A/N et d'une détection OFDM, le niveau de signal étant détecté dans la chaîne réceptrice avant que le signal ne soit pris pour sa conversion A/N, et le niveau de signal étant commandé dans la chaîne réceptrice sur la base de ladite détection, **caractérisé en ce que**
dans le signal reçu au travers de la première chaîne réceptrice, ladite période sans signal est également détectée et au cours de cette période sans signal le récepteur est configuré pour cesser la détection de niveau dudit signal (S1) et pour détecter, à la place, la puissance de bruit reçue au travers de la première chaîne réceptrice,
un second signal (S2) en provenance d'une seconde source de signaux est reçu au travers d'une seconde chaîne réceptrice dans ledit récepteur, dans ladite seconde chaîne réceptrice les opérations suivantes étant sensiblement accomplies de la même manière que dans la première chaîne réceptrice : le niveau de signal est détecté et est commandé, et la puissance de bruit est détectée,
une première et une seconde valeur limite sont fixées pour le rapport signal/bruit de la première et de la seconde chaîne réceptrice, respectivement,
les rapports signal/bruit des première et seconde chaînes réceptrices sont comparés aux première et seconde valeurs limites, respectivement, et
le second signal reçu au travers de la seconde chaîne réceptrice est connecté à la place du premier signal reçu au travers de la première chaîne afin d'être converti A/N et l'OFDM est détecté lorsque le rapport signal-bruit de la première chaîne réceptrice est en deçà de la première valeur limite et le rapport signal-bruit de la seconde chaîne réceptrice dépasse la seconde valeur limite.

2. Procédé selon la revendication 1, **caractérisé en ce que** les niveaux de signaux sont commandés dans les première et seconde chaînes réceptrices en fonction de signaux de référence respectifs (REF1, REF2) et **en ce que** les rapports signal-bruit des première et seconde chaînes réceptrices sont comparés aux valeurs limites respectives en comparant les valeurs de puissance de bruit détectées respectives aux valeurs limites correspondant auxdites première et seconde valeurs limites du rapport signal-bruit, lesdites première et seconde valeurs limites étant fixées au moyen des signaux de référence respectifs (REF1, REF2).

3. Procédé selon la revendication 2, **caractérisé en ce que** des crêtes de variation brusque sont éliminées par filtrage des résultats de la comparaison des valeurs de puissance de bruit détectées avec les valeurs limites respectives.

4. Procédé selon la revendication 1, **caractérisé en ce que** pour comparer le rapport signal-bruit d'une chaîne réceptrice à la valeur limite correspondante, la puissance de bruit de la chaîne réceptrice est estimée en prenant la moyenne du spectre de puissance de bruit obtenu à partir de ladite période sans signal après une conversion FFT incluse dans la détection OFDM.

5. Procédé selon la revendication 4, **caractérisé en ce que** la puissance de bruit est estimée par la prise de la moyenne des composantes de spectre de bruit mesurées les unes avec les autres.

6. Procédé selon la revendication 5, **caractérisé en ce que** lors de la prise de la moyenne des composantes de spectre, la composante de spectre la plus élevée est ignorée afin d'éliminer un signal d'interférence à bande étroite.

7. Procédé selon l'une quelconque des revendications 4 à 6, **caractérisé en ce que** la puissance de bruit de la seconde chaîne réceptrice est estimée en connectant, par moments, la seconde chaîne réceptrice dont le signal OFDM doit être détecté pendant la durée de ladite période sans signal.

8. Récepteur destiné à recevoir un signal OFDM dans un système de diffusion numérique et dans la trame duquel se trouve, à des fins de synchronisation, en une position prédéterminée, une période sans signal d'une longueur prédéterminée, comprenant :
une première chaîne réceptrice (32, 33, 34) destinée à recevoir et à traiter un premier signal provenant d'une première source de signaux,
un convertisseur A/N (23) et un détecteur OFDM (24), couplés à la suite, sur lesquels le signal reçu et traité (S1) est pris à partir de ladite chaîne réceptrice pour que le signal OFDM soit détecté,
un premier détecteur de niveau (17c) sur lequel le signal (S1) reçu et traité par la première chaîne réceptrice est également pris afin de détecter le niveau du signal et générer un signal de commande (AGC1) afin de fixer le niveau de signal dans la première chaîne réceptrice en fonction d'un signal de référence (REF1) reçu par le détecteur de niveau, et
des moyens destinés à détecter ladite période sans signal,
**caractérisé en ce qu'**il inclut également :
un premier détecteur de bruit (18c) qui est configuré par un signal de validation (GATE1) obtenu à partir de la détection de ladite période sans signal afin de détecter le bruit reçu par la première chaîne réceptrice pendant la durée de la période sans signal, de sorte que ledit signal de validation (GATE1) configure également le premier détecteur de niveau afin de cesser la détection de niveau pendant la durée de ladite période sans signal,
une seconde chaîne réceptrice (35, 36, 37, 38 ; 31, 32, 37, 38) destinée à recevoir et à traiter un second signal provenant d'une seconde source de signaux et un second détecteur de niveau (17ab) et un second détecteur de bruit (18ab) qui fonctionnent par rapport à la seconde chaîne réceptrice de la même façon que le premier détecteur de niveau (17c) et le premier détecteur de bruit (18c) fonctionnent par rapport à la première chaîne réceptrice, de sorte que le second détecteur de niveau reçoit un signal de référence (REF2) et génère un signal de commande (AGC2) afin de fixer le niveau de signal de la seconde chaîne réceptrice, et le signal de validation (GATE2) commandant lesdits seconds détecteurs (17ab, 18ab) est obtenu à partir de la détection de ladite période sans signal du second signal,
des moyens (21) destinés à connecter le second signal (S2) obtenu à partir de la seconde chaîne réceptrice à un convertisseur A/N (23) et à un détecteur OFDM (24) à la place du premier signal (S1) obtenu à partir de la première chaîne réceptrice, et
un premier et un second comparateur (19c, 19ab) destinés à comparer la puissance de bruit détectée par les premier et second détecteurs de bruit (18c, 18ab), respectivement, aux première et seconde valeurs limites correspondantes établies au moyen des signaux de référence correspondants (REF1, REF2) de sorte que le second signal (S2) reçu au travers de la seconde chaîne réceptrice est connecté à la place du premier signal (S1) reçu au travers de la première chaîne réceptrice à un convertisseur A/N (23) et à un détecteur OFDM (24) lorsque la puissance de bruit détectée par le premier détecteur de bruit (18c) dépasse ladite première valeur limite et lorsque la puissance de bruit détectée par ledit second détecteur de bruit (18ab) se trouve en deçà de ladite seconde valeur limite.

9. Récepteur selon la revendication 8, **caractérisé en ce qu'**il inclut deux chaînes réceptrices complètes, parmi lesquelles :
la chaîne réceptrice destinée à une réception par satellite comprend une première antenne (31), une première partie de tête (32) qui est essentiellement une partie de fréquence décroissante, une première partie intermédiaire (33) qui est essentiellement une partie de fréquence décroissante et de stabilisation incluant un synthétiseur de fréquence, et une première partie de queue (34) qui est essentiellement une partie de détecteur I/Q, et
la chaîne réceptrice destinée à la réception au sol comprend une antenne multibande (35) et une partie de tête (36), une partie intermédiaire (37) et une partie de queue (38) dont l'objet et la fonction sont identiques à ceux des parties correspondantes (32, 33, 34) de la première chaîne réceptrice.

10. Récepteur selon la revendication 9,
**caractérisé en ce que** la première chaîne réceptrice comprend une chaîne réceptrice (31, 32, 33, 34) qui est destinée à une réception par satellite, et la seconde chaîne réceptrice comprend une chaîne réceptrice (35, 36, 37, 38) qui est destinée à une réception au sol.

11. Récepteur selon la revendication 9,
**caractérisé en ce que** la première chaîne réceptrice comprend une chaîne réceptrice (31, 32, 33, 34) destinée à une réception par satellite et **en ce que** le récepteur inclut également un commutateur (6) entre la seconde partie de tête (36) et la seconde partie intermédiaire (37) et une connexion de ce connecteur à un point entre la première partie de tête (32) et la première partie intermédiaire (33), de sorte que la seconde partie de tête puisse être déconnectée de la seconde partie intermédiaire et que la seconde chaîne réceptrice puisse être connectée de façon à comprendre la première antenne (31), la première partie de tête (32), la seconde partie intermédiaire (37) et la seconde partie de queue (38).

12. Récepteur selon l'une quelconque des revendications 9 à 11, **caractérisé en ce que** la seconde partie de tête (36) inclut, en plus d'un branchement de fréquence décroissante (2ab, 3ab, 4ab), un filtre d'antenne entre ledit branchement et l'antenne, et pour des fréquences d'émission au sol inférieures, une connexion directe en parallèle avec le branchement de fréquence décroissante, **en ce que** la seconde partie intermédiaire (37) inclut deux branchements de fréquence décroissante et de stabilisation (a, b), dont l'un ou l'autre peut être connecté par un commutateur (13) entre la seconde partie intermédiaire et la seconde partie de queue à la seconde partie de queue (38), et **en ce que** l'un ou l'autre des branchements de la seconde partie de tête (36) peut être sélectionné pour lesdits branchements (a, b) de la seconde partie intermédiaire au travers d'un commutateur (6) entre la seconde partie de tête (36) et la seconde partie intermédiaire (37).

13. Récepteur selon la revendication 12,
**caractérisé en ce qu'**il existe également des connexions du commutateur (13) entre la seconde partie intermédiaire (37) et la seconde partie de queue (38) à la première partie intermédiaire (33) et à la première partie de queue (34), et **en ce que**, au moyen du commutateur (13), un branchement (a) de la seconde partie intermédiaire (37) peut être connecté à la seconde partie de queue (38) et l'autre branchement (b) de la seconde partie intermédiaire (37) peut être connecté à la première partie de queue (34) tandis que, dans le même temps, la première partie intermédiaire (33) est déconnectée de la première partie de queue (34), de sorte que les première et seconde chaînes réceptrices peuvent, toutes deux, recevoir des signaux provenant d'un émetteur au sol et une commutation peut être réalisée entre elles.
